# EUROPEAN PATENT SPECIFICATION

(11) **EP 1 562 818 B1**
(45) Date of publication and mention of the grant of the patent: **07.10.2009**
(21) Application number: 03714508.3
(22) Date of filing: 04.04.2003
(51) Int. Cl.: B62D 21/12

(54) **A MODULAR MOBILITY VEHICLE**
MODULARES MOBILITÄTSFAHRZEUG
VEHICULE MODULAIRE DE DEPLACEMENT

(30) Priority: 04.04.2002 US 116453
(43) Date of publication of application: 17.08.2005
(73) Proprietor: INTEGRATED VISION, INC., Craftsbury Common, VT 05827 (US)
(72) Inventor: STRONG, Russell, W., Craftsbury Common, VT 05827 (US)
(74) Representative: Jackson, Richard Eric
(86) International application number: PCT/US2003/010213
(87) International publication number: WO 2003/084772

(56) References cited:
- US-A- 1 368 893
- US-A- 3 508 294
- US-A- 3 591 883
- US-A- 3 657 866
- US-A- 3 823 790
- US-A- 4 081 090
- US-A- 4 187 436
- US-A- 4 483 653
- US-A- 4 655 471
- US-A- 4 676 545
- US-A- 4 960 180
- US-A- 5 064 209
- US-A- 5 325 558
- US-A- 5 401 056
- US-A- 5 402 859
- US-A- 5 816 650
- US-A- 5 934 397
- US-A- 5 934 397
- US-A- 6 062 632
- US-B1- 6 178 668
- US-B1- 6 206 446
- US-B1- 6 276 582
- US-B1- 6 328 121
- US-B1- 6 341 657

## Description

### Technical Field

The present invention relates generally to mobility vehicles. More specifically, the present invention relates to a modular construction of elements that results in a multitude of different mobility and utility vehicles that can be applicable to a wide variety of applications with only minimal change to the core elements.

### Background Of The Invention

The modular construction of mobility vehicles, i.e., vehicles that are capable of carrying an occupant, are well known for a variety of purposes. Most modular vehicles have a base or primary module containing a power source therein. These base or primary modules are stable units in of themselves, and for use as modular vehicles, typically have four wheels or integrated stability portions incorporated therein. These mobility vehicles having inherently stable base modules typically have other modules attached thereto, such as operator environments, engine modules, styling elements, or utility attachments that allow the base module to be converted or configured for use in a variety of different applications. These applications are generally in a singular field of use, including transport, utility, commercial, and industrial equipment. In other words, a base module and its associated modules are intended for use in a single market. While these modular vehicles work as intended, they carry the primary expense in the stable base module, and thus the attached modules are less expensive since the stability effect is already provided in the base module. However, the attachment of utility modules to the stable base structure can result in larger and bulkier vehicles that have somewhat compromised applications.

The inventive modular vehicle disclosed herein carries less expense in the base module than the above-described modular vehicles with both having similar costs when utilized as a one-use configuration. The less expensive base thus requires a greater relative expense when a number of modules are to be purchased and/or used, since the purchased modules must carry a stability element. This configuration, however, provides greater benefit capabilities to the user, as will become apparent in the following description. Further, the relative size of the modular vehicle for a given operation can be better optimized with the disclosed inventive smaller less expensive, base module. Moreover, distinct advantages can be achieved with the modularity of the disclosed vehicle, including modularity over a much wider range of market segments.

More recently, attempts have been made to introduce a two wheel mobility device for transporting people, which is smaller than the prior four wheel personal vehicles. This two wheel device is balanced due to the inclusion of a pair of non-ground engaging gyroscopes that provide fore and aft balance. However, the device is disadvantageous in that it cannot effectively provide significant off road or all-terrain transportation. Moreover, the device is limited in operating at higher speeds. Further, the device is limited in its ability to accommodate loads or utility which greatly affect the weight balance distribution of the unit. These limitations render the device unusable for utility that requires stability with heavy attachments or significant carrying capabilities.

Additionally, there are many types of modes of transportation that are available to handicapped persons or those who need or require mobility assistance. These modes of transportation include wheelchairs, both manual and power assisted chairs, as well as other devices that accommodate a wheel chair in a three or four wheel vehicle. However, because these transportation devices are primarily intended for those who require the use of a wheelchair or other assisted device, they are limited in their potential applications. In the case of the vehicle wheelchair user, for example, these transportation devices are not typically used by people that do have these limitations. It is the intent of this invention to allow use, and to provide desire of use, of this modular vehicle equally by both the disabled user and the able-bodied user.

Presently, for the disabled, the available modes of transportation are limited in their capabilities to expand the ability of a person that is confined to a wheelchair to aggressively enjoy outdoor activities, to do utility work, or move about the outdoors freely for: fishing, hunting, mowing, sweeping, snow blowing, traveling across fields, dirt paths or other places more properly accessible by all-terrain vehicles. The mobility needs of handicapped people or those that require transportation assistance are typically met with expensive units dedicated to single or very limited capabilities. These units thus require the purchase of additional
- costly and specialized equipment to perform other utility functions, or achieve additional mobility features, as well as achieve all-season abilities. Without this specialized equipment, these functions cannot be performed. It would therefore be desirable to provide a modular mobility vehicle that is readily adaptable for the disability market and also overcomes these disadvantages.

Further, it is understood that, at times, the wheelchair bound would like to remain in their chair and take it with them as they travel. It is also known, that, at other times, the wheelchair bound are desirous of traveling in a different comfortable seat in the same vehicle, which still provides features that fit their needs. Hence, it would be advantageous to provide an operator area that is highly modular in design to overcome this inability of prior vehicles.

There are no known mobility vehicles of modular construction that are intended to accommodate those who require or use wheelchairs, which can accommodate all-terrain capabilities and utility functions. Further, there are no known modular vehicles that uniquely address both personal mobility and utility, with modularity that maximizes benefit to both applications and provides combinations of both simultaneously. In developing a solution that overcomes these disadvantages, the Applicant has overcome many of the problems associated with mobility vehicles in general.

While many modular vehicle designs are known and many modular designs are known that are designed for distinct utility purposes, i.e., for functional commercial use and not for use in carrying passengers, it is believed that none can provide the novel benefits provided herein. The disclosed invention provides novelty in an operator modular compartment on a singular axle frame module, with the ability to accommodate a multitude of modules forwardly and rearwardly of the axle to advantageously utilize power modules for a broad range of mobility, utility, and relaxation/comfort purposes. Further, each of several market segments can be configurably addressed utilizing core components and technology without the need for the expense of a separate vehicle platform.

US 5,934,397 discloses a modular vehicle assembly having a power operated module having a drive mechanism and a carrying compartment located substantially above the drive mechanism, a power source of the power generated module in communication with the drive mechanism, a stability module configured to communicate with the ground to, at least in part, provide fore and aft balance to the power operated module, and a pair of ground engaging devices located on opposite sides of the power operated module with each of the ground engaging devices being in communication with the drive mechanism.

### Summary Of The Invention

It is therefore an object of the present invention to provide a modular vehicle assembly that can be readily reconfigured for a wide variety of uses and applications.

It is a related object of the present invention to provide a modular vehicle assembly that is capable of both personal and passenger mobility for road travel.

It is another related object of the present invention to provide a modular mobility vehicle assembly that is capable of all-terrain off road travel.

It is a further related object of the present invention to provide a modular mobility vehicle assembly that is intended for the disability market.

It is still a further related object of the present invention to provide a modular mobility vehicle assembly that is intended for the commercial utility market.

It is still yet a further related object of the present invention to provide a modular mobility vehicle assembly that is for the agricultural market.

It is another object of the present invention to provide a modular vehicle assembly wherein the fore and aft balancing of the assembly is provided by a separate module.

It is still another object of the present invention to provide a modular vehicle assembly that is designed to accommodate a multitude of different stability modules.

It is still a further object of the present invention to provide a modular vehicle assembly that can decrease manufacturing platform cost.

It is yet a further object of the present invention to provide a modular mobility vehicle assembly that can be converted between a vehicle that is primarily intended for mobility purposes to a unit that is primarily intended for commercial utility.

It is yet another object of the present invention to provide a modular vehicle assembly where the attachment and the removal of various modules can be accomplished in a relatively short period of time with a relatively small amount of effort.

It is an additional object of the present invention to provide a modular vehicle assembly where the attachment and the removal of various modules can be accomplished during the manufacturing process.

It is a further additional object of the present invention to provide a modular vehicle assembly where the attachment and the removal of various modules can be accomplished by a sales dealer or by a lease or rental agent's service department.

It is still a further additional object of the present invention to provide a modular vehicle assembly where the attachment and the removal of various modules can be accomplished by an owner at the point of use.

In accordance with that above and the other objects of the present invention, a modular vehicle assembly as claimed hereinafter is provided.

Other objects and features of the present invention will become apparent when viewed in light of the detailed description of the preferred embodiment when taken in conjunction with the attached drawings and appended claims.

### Brief Description Of The Drawing

Figure 1 is perspective view of a modular vehicle assembly in accordance with a preferred embodiment of the present invention;

Figure 2 is a side view of a power operated module for a modular vehicle assembly in accordance with a preferred embodiment of the present invention;

Figure 3 is a rear view of a power operated module for a modular vehicle assembly in accordance with a preferred embodiment of the present invention;

Figure 4 is an exploded view of a modular vehicle assembly in accordance with a preferred embodiment of the present invention;

Figure 5 is an exploded view of a power operated module with a variety of modules illustrated for use therewith in accordance with a preferred embodiment of the present invention;

Figure 6 is a top plan view of the power operated module and associated modules shown in Figure 5;

Figure 7 is an exploded view of a power operated module with a variety of modules illustrated for use therewith in accordance with another preferred embodiment of the present invention;

Figure 8 is a top plan view of the power operated module and associated modules shown in Figure 7;

Figure 9 is an exploded view of a power operated module with a variety of modules illustrated for use therewith in accordance with a preferred embodiment of the present invention;

Figure 10 is a top plan view of the power operated module and associated modules shown in Figure 9;

Figure 11 is a side view of a snow blower stability module for attachment to a power operated module of a modular vehicle assembly in accordance with a preferred embodiment of the present invention;

Figure 12 is a side view of a sweeper stability module for attachment to a power operated module of a modular vehicle assembly in accordance with a preferred embodiment of the present invention;

Figure 13 is a side view of a rear tillage stability module for attachment to a power operated module of a modular vehicle assembly in accordance with a preferred embodiment of the present invention; and

Figure 14 is a side view of a front tillage stability module for attachment to a power operated module of a modular vehicle assembly in accordance with a preferred embodiment of the present invention.

### Detailed Description Of The Preferred Embodiment

The present invention relates to a modular mobility vehicle. The mobility vehicle, as discussed herein, is comprised of a variety of individual modules, which can all be readily attached and removed as required depending upon the use and/or application. The modular mobility vehicle can also be configured for a variety of uses. An exemplary use for the preferred mobility vehicle is as a handicapped mobility vehicle. However, other uses include personal transport, utility, agricultural, commercial and industrial applications.

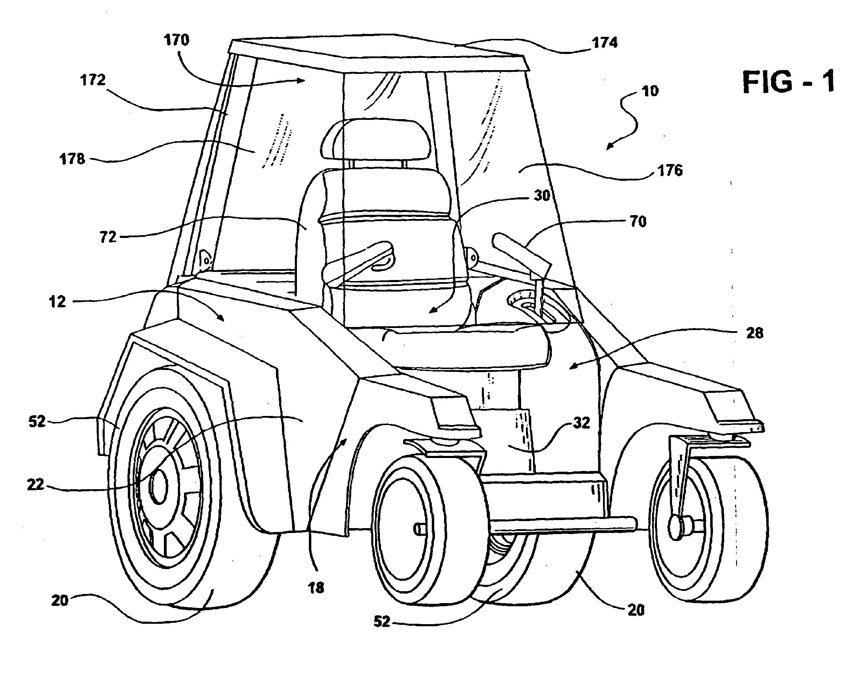

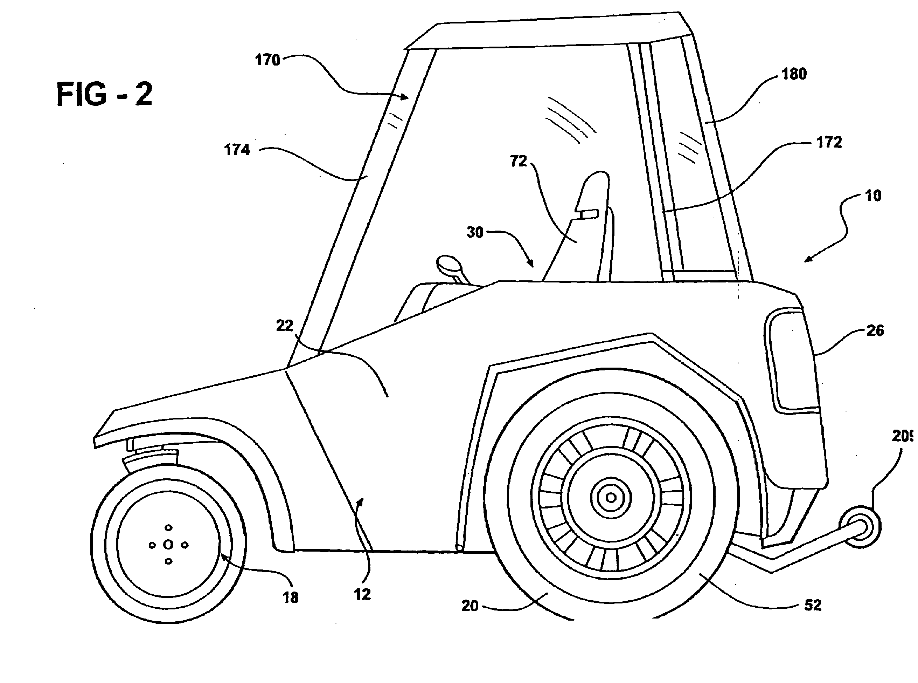

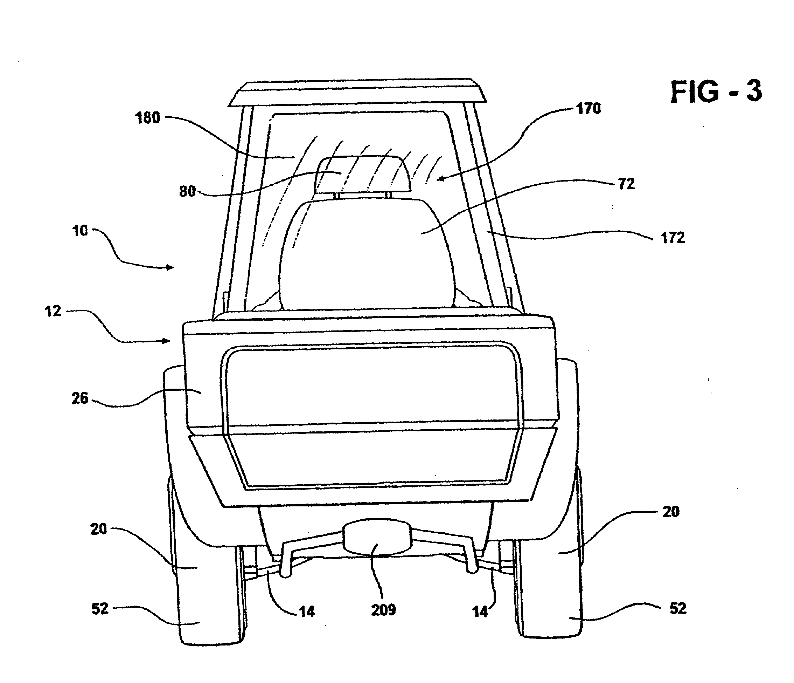

Referring now to Figures 1 through 3 which illustrate an exemplary modular vehicle assembly 10 in accordance with the present invention. The modular vehicle assembly 10 includes a power operated module 12, a drive mechanism 14 disposed in the power operated module 12, power source 16, a stability module 18 in communication with the ground, and a pair of ground engaging devices 20, which are in communication with the drive mechanism 14. Moreover, as shown and discussed herein, a variety of different modules may be used with the power operated module 12. It will be understood that the modules shown in any Figure can be utilized with or interchanged with any other module in any of the other Figures.

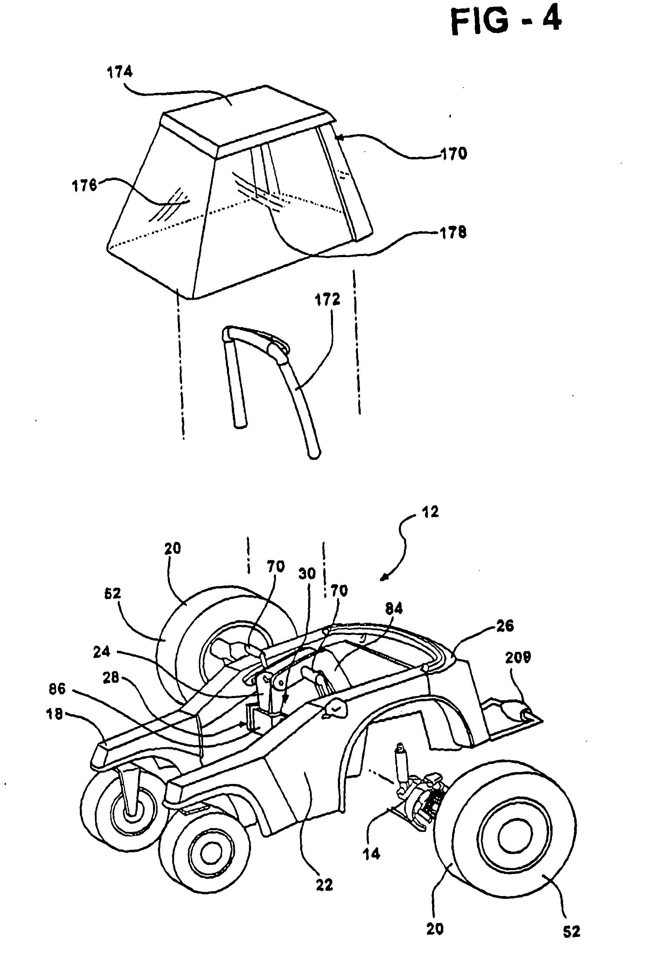

As shown best in Figures 1 and 4, the power operated module 12 is preferably formed as a single frame structure and is generally u-shaped with a first side portion 22, an opposing second side portion 24, a back portion 26 that extends between and connects the first side portion 22 and the second side portion 24, and an open front portion 28. It should be understood, that the power operated module 12 can be configured in a variety of different ways, including having an open rear portion, such that the generally u-shape is rearward facing. Alternatively, it is foreseen that any of the other portions of the modular frame can be fully or partially open. In the preferred embodiment, the first side portion 22, the second side portion 24, the back portion 26, and the front portion 28 define a carrying compartment 30 there between. The carrying compartment 30 is preferably defined by a floor enclosure portion 32.

The carrying compartment 30 of the power operated module 12 is preferably located substantially above or over the drive mechanism 14. The drive mechanism 14 is in communication with the power source 16, such that when the power source 16 is operating, it provides power to the drive mechanism 14. The drive mechanism 14, as shown, is preferably comprised of a primary axle 50. However, the drive mechanism 14 may alternatively be an independent suspension sub-axle. Thus, the primary axle 50 or the independent suspension sub-axle are driven by the power source 16, which in turn causes the pair of ground engaging devices 20 attached to either end of the drive mechanism 14 to rotate. As will be understood by one of skill in the art, the relative motion of the drive mechanism 14 creates steering. Moreover, as discussed in more detail below, the stability module can have steering or both can communicate together.

The power operated module 12 preferably has a power source 16 for powering the vehicle assembly 10 associated therewith. More preferably, the power source 16 is incorporated into the power operated module 12, however, it will be understood that the power source 16 may be located in a variety of other locations. The power source 16 can be one of a variety of different mechanisms. The power source 16 is preferably an internal combustion engine coupled to a hydrostatic or a mechanical drive, as generally represented by reference number 34. However, the power source 16 may alternatively be an internal combustion engine coupled to a generator for powering a motor and a battery unit, as generally represented by reference number 36. The hybrid-drive unit 36 may also include one or more batteries as desired. Further, the power source 16 may also be an electric battery unit that supplies power to an electric drive motor. Moreover, the electric device may also include at least one storage battery unit that is charged by an external source. Additionally, the power source 16 may be a fuel cell.

As discussed above, the drive mechanism 14 in the power operated module 12 has a ground engaging device 20 attached to either end thereof. The ground engaging devices 20 are sized to support ground clearance and all-terrain movement. The ground engaging devices 20 are thus sized to allow the vehicle assembly 10 to perform and drive on all types of terrain. The ground engaging devices are preferably a pair of large wheels or tires 52, as shown in Figures 1 through 5. While a variety of different types and sizes of wheels may be used, they must be large enough to provide necessary ground clearance and to allow for all-terrain movement.

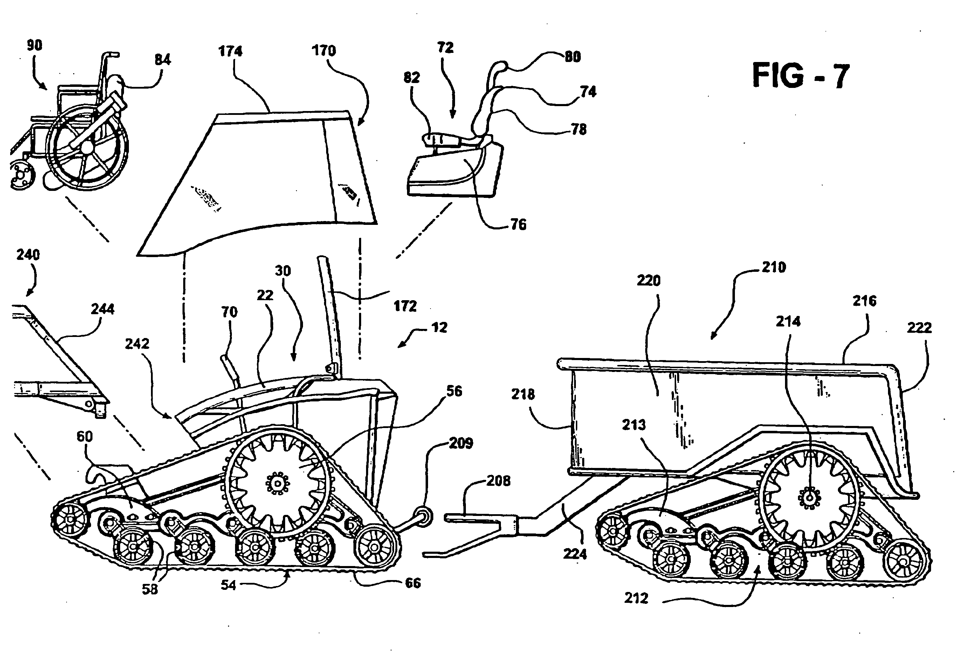

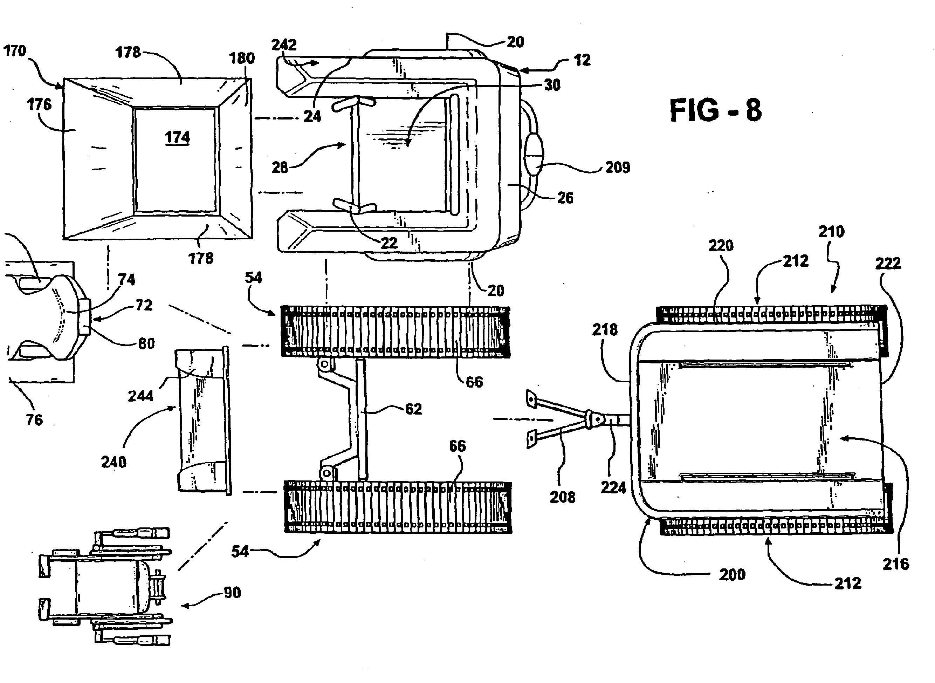

Alternatively, in another embodiment shown in Figures 7 and 8, the ground engaging device module is a track assembly 54 that attaches to either end of the drive mechanism 14. The track assembly 54 has a ground engaging portion of a certain length and a chassis with a forward structure portion 60. The track assembly 54, as shown, preferably includes a primary wheel 56, which is in communication with one end of the drive mechanism 14. The track assembly 54 includes a plurality of smaller secondary wheels 58, which support and are driven by a track 66 and provide the track assembly 54 with the ground engaging portion. The track 66 is in direct contact with the primary wheel 56 and each of the secondary wheels 58. The forward structure portion 60 of the track assembly 54, includes an attachment bar 62 that allows the track assembly 54 to be secured to the power operated module 12. The forward structure portion 60 and the attachment bar 62 act as a stability module to support the power operated module 12 and provide fore and aft balance thereto to prevent the vehicle assembly 10 from tipping over while in use.

The carrying compartment 30 of the modular vehicle assembly 10 is preferably intended to receive at least one occupant therein. Once the occupant is located in the carrying compartment 30, the occupant can operate the vehicle assembly 10 through one or more steering controls 70. As shown, the steering controls 70 extend upwardly from each of the first side portion 22 and the second side portion 24 to allow the occupant to operate the vehicle assembly 10. However, it will be understood that the steering controls 70 can take on a variety of singular and other configurations, utilizing mechanical, electrical or combinations of such controls.

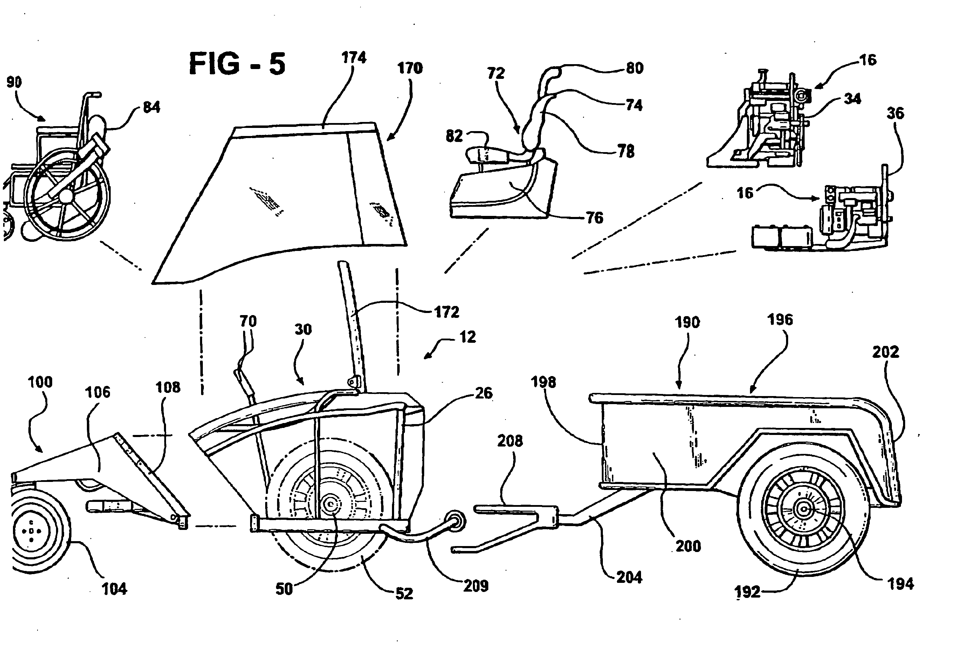

In order for an occupant to be received in the carrying compartment 30, a seating module 72 is preferably located therein. Figures 5 though 8 illustrate an example of a preferred seating module 72 having a fixed comfort seat 74 for use in accordance with the present invention. The comfort seat 74 is preferably a padded seat that is secured in an adjustable manner within the carrying compartment 30. The comfort seat 74 preferably has a seat bottom 76, a seat back 78, a head rest 80, and a pair of arm rests 82. The comfort seat 74 is preferably intended to receive a single person, but it will be appreciated that a multiple person comfort seat may be positioned in the carrying compartment 30. Moreover, the carrying compartment 30 may also have one or more storage compartments formed therein that are accessible by an occupant seated in the comfort seat 74.

In the event that the seating module 72 includes a multiple person comfort seat that is positioned in the carrying compartment 30, the carrying compartment 30 may have to be made wider by increasing the wheel base. The comfort seat 74 also preferably is adjustable between a fully upright position and a reclined position. The comfort seat 74 can also be positioned to rest at any angle or location between the fully upright position and the fully reclined position. The movement of the comfort seat 74 between the fully upright position and the fully reclined position, as well as any of the positions in between, may be done manually or with power actuation.

The carrying compartment 30 may also have a lift module 84 disposed therein. The lift module 84 (Figure 4) is intended to be secured within the carrying compartment 30 and then extend outwardly to engage the seating module 72. The engagement between the lift module 84 and the seating module 72 preferably occurs through the use of a mounting bracket 86. The preferred mounting bracket 86 is shown and described in detail in co-pending U.S. Provisional Application Serial No. 60/318,911, entitled "Wheelchair Attachment System," and filed on September 13, 2001. Similarly, the preferred lift module 84 is shown and described in co-pending U.S. Provisional Application Serial No. 60/293,673, entitled "Wheelchair Lift Mechanism Into A Mobility Vehicle," and filed May 25, 2001. However, it will be understood that a variety of other mounting brackets and lift modules can be utilized to accomplish the engaging and lifting functions.

The lift module 84 is intended to move the seating module 72 between a ground engaging position and a secured or locked position in the carrying compartment 30. The lift module 84 is preferably configured such that it can be positioned at any location between the ground engaging position and the locked position. Accordingly, the lift module 84 can engage the comfort seat 74 and move it with an occupant therein from a position on the ground to a position where the comfort seat 74 including the occupant is locked within the carrying compartment 30.

In accordance with another embodiment of the present invention, the seating module 72 is a wheelchair 90. The wheelchair 90 can be a manually operated wheelchair, a power assisted chair or other like device. The lift module 84 is preferably utilized with the wheelchair 90 to allow an occupant in a wheelchair 90 to be lifted from a ground engaging position to a locked position in the carrying compartment 30. It will be understood that the carrying compartment can also be configured with one or more storage compartments that are accessible to the occupant of the wheelchair 90 when located in the carrying compartment 30. It will be understood that the carrying compartment 30 can be located anywhere within the power operated module 12. Additionally, the lift module 84 can be configured to move the wheelchair 90 between a fully upright position and a fully reclined position with a multitude of settings between those positions. Again, the lift module 84 may be actuated to move between the fully upright position and the fully reclined position either manually or with power actuation.

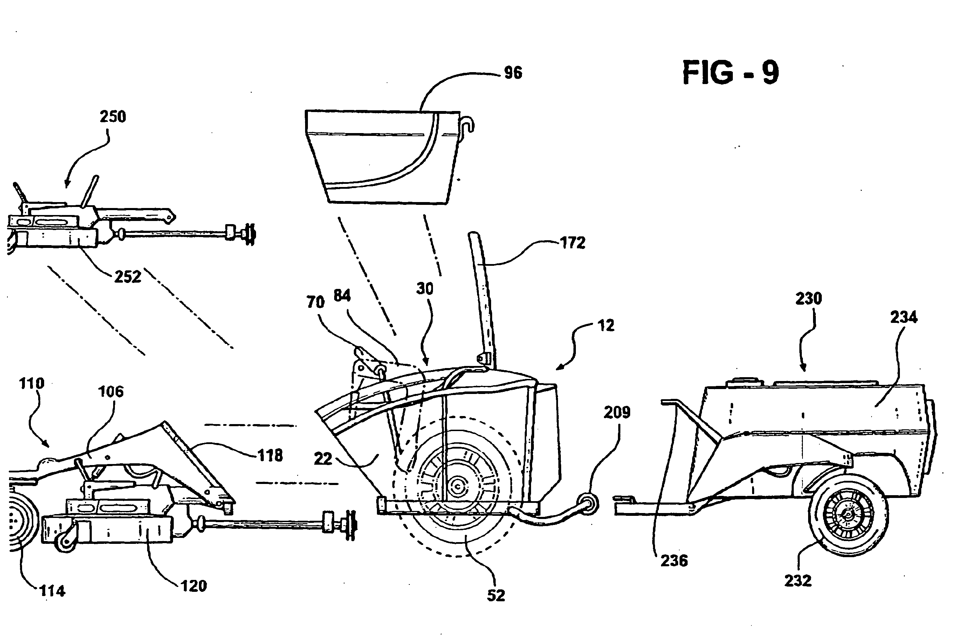

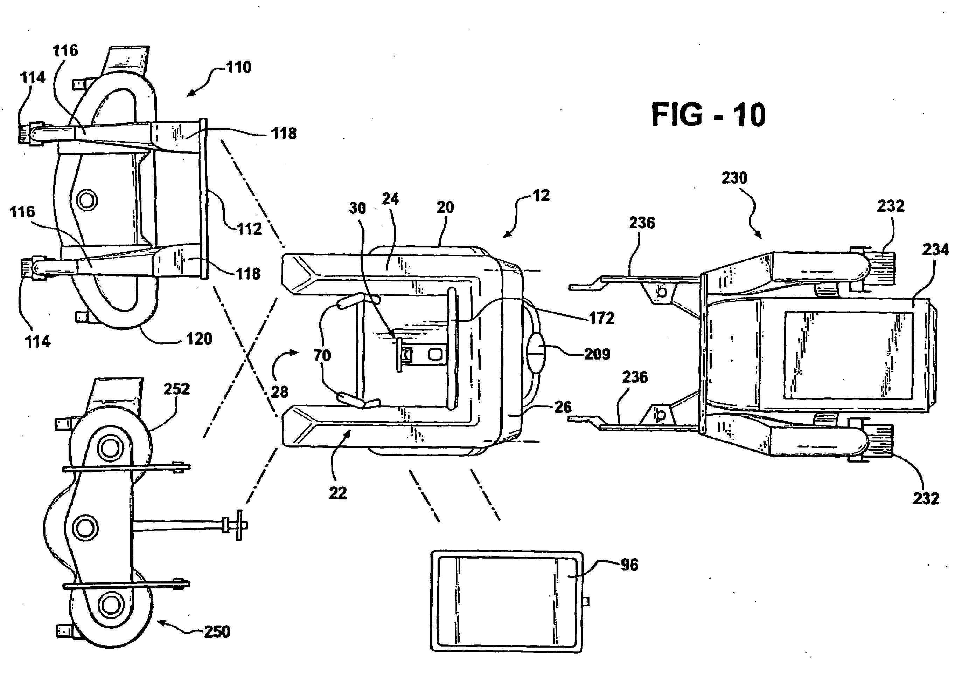

Alternatively, a storage module 96 (Figures 9 and 10) may be located within the carrying compartment 30. The storage module 96 is intended to retain one or more items therein that are to be transported by the vehicle assembly 10. The storage module 96 may be lifted into and out of the carrying compartment 30 by the lift module 84 in the same fashion as the seating module 72. Alternatively, the lift module 84 may lift items into and out of the storage module 96 while its base remains stationary within the carrying compartment 30. When the storage module 96 is positioned in the carrying compartment 30, the vehicle assembly 10 may be operated by an operator positioned in an alternative safe seating location or by remote control. Alternatively, a robotics mechanism placed in communication with the power source 16 can operate the vehicle assembly 10 when an operator is not located therein.

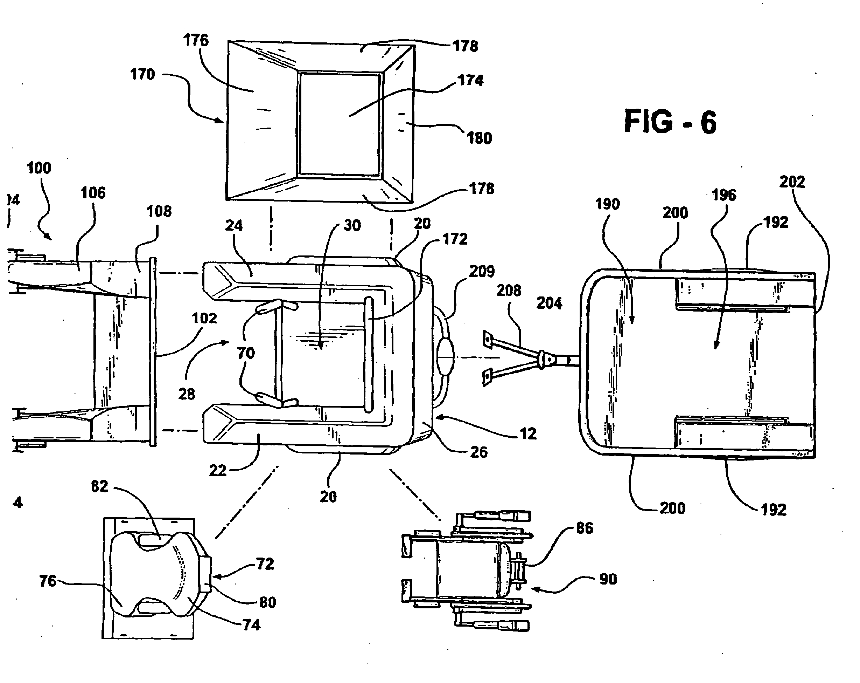

The Figures illustrate a variety of stability modules for use in accordance with the present invention. A preferred stability module that performs the same stability function as stability module 18 in Figures 1-4, shown in Figure 5 and 6, is a dolly wheel module 100 that is attached to the power operated module 12. As shown, the dolly wheel module 100 includes an attachment bar 102 that allows for attachment to the power operated module 12. The dolly wheel module 100 also includes a pair of dolly wheels 104 that are attached to a frame and suspension portion 106. The frame and suspension portions 106 are fixedly attachable to a respective one of the first side portion 22 and the second side portion 24 at a respective attachment surface 108. As will be understood, the utilization of the pair of dolly wheels 104 provides zero turn capabilities to the modular vehicle assembly 10. The dolly wheel module 100 thus provides both a stability function by providing balance to the vehicle assembly 10 and a utility function by providing support for vehicle options. While the dolly wheel module 100 is illustrated with a pair of dolly wheels 104, it will be understood that it need only utilize a single dolly wheel or may use more than two dolly wheels104 that are steered in communication with the power source 16.

Figures 9 and 10 illustrate another stability module in accordance with the present invention. One stability module 18 shown in Figures 9 and 10 is a mower stability module 110. The mower stability module 110 includes an attachment bar 112 and a pair of dolly wheels 114. Each of the pair of dolly wheels 114 is attached to a frame and suspension portion 116 that is in communication with a respective attachment surface 118. The mower stability module 110 also includes a lawn mower 120 attached thereto to allow for grass cutting. The mower stability module 110, like the dolly wheel module 100, can be easily attached to and removed from the power operated module 12 by way of the attachment bar 112 and the attachment surfaces 118. Alternatively, a coupling system may be utilized for attachment thereof. The lawn mower 120 is preferably in communication with the power source 16 to effectuate operation thereof.

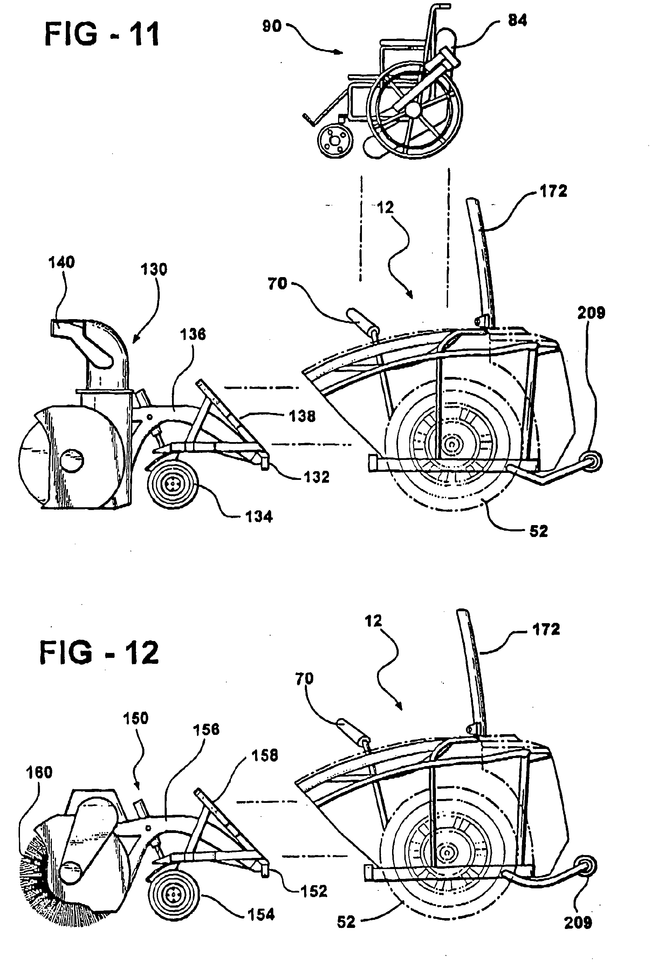

Figure 11 illustrates another stability module in accordance with the present invention. The stability module shown in Figure 11 is a snow blower stability module 130. The snow blower stability module 130 includes an attachment bar 132 and a pair of dolly wheels 134. Each of the pair of dolly wheels 134 is attached to a frame and suspension portion 136 that is in communication with a respective attachment surface 138. Alternatively, instead of a pair of dolly wheels 134, one or more wheels that are steered in communication with the power source 16 may be utilized. The snow blower stability module 130 also includes a snow blower 140 attached thereto to allow for snow removal. The snow blower stability module 130 can also be easily attached to and removed from the power operated module 12 by way of the attachment bar 132 and the attachment surfaces 138 or coupling system utilizing attachment thereof. The snow blower 140 is preferably in communication with the power source 16 to effectuate operation thereof. The snow blower stability module 130 thus provides both a stability function by providing balance to the vehicle assembly 10 and a utility function by providing snow blowing capabilities.

Figure 12 illustrates another stability module in accordance with the present invention. The stability module shown in Figures 12 is a sweeper stability module 150. The sweeper stability module 150 includes an attachment bar 152 and a pair of dolly wheels 154. Each of the pair of dolly wheels 154 is attached to a frame and suspension portion 156 that is in communication with a respective attachment surface 158. Alternatively, instead of a pair of dolly wheels, one or more wheels that is steered in communication with the power source 16 may be utilized. The sweeper stability module 150 also includes a sweeper 160 attached thereto to allow for sweeping function. The sweeper stability module 150 can also be easily attached to and-removed from the power operated module 12 by way of the attachment bar 152 and the attachment surfaces 158 or coupling system effectuating attachment thereof. The sweeper 160 is preferably in communication with the power source 16 to effectuate operation thereof. The sweeper stability module 150 thus provides both a stability function by providing balance to the vehicle assembly 10 and a utility function by providing sweeping capabilities.

The modules 100, 110, 130, and 150 are all preferably located forwardly of the drive mechanism 14 and each provide both stability and utility functions. It will be understood that a variety of other stability and/or utility modules can be attached to the power operated module 12. It will be understood that instead of locating the stability module forwardly of the drive mechanism, the stability module may be located rearwardly of the drive mechanism 14. Alternatively, stability modules with compensating suspension mechanisms thereof, may be located both forwardly and rearwardly of the drive mechanism 14.

Figures 1 through 8 illustrate an environmental enclosure module 170 for the modular vehicle assembly 10. The environmental enclosure module 170 is intended to be positioned at least partially over the carrying compartment 30 and more preferably substantially over the carrying compartment 30 to provide weather related protection to an occupant located therein. The environmental enclosure module 170 is preferably intended to be attached to a roll bar 172, which is secured to the power operated module 12. However, it will be understood that the environmental enclosure module 170 may be secured to the power operated module 12 in a variety of other ways.

As will be understood, the environmental enclosure module 170, may take on a variety of configurations. The enclosure module 170 may include only a roof portion 174, which is secured to the roll bar 172 or other structure of the power operated module 12. Further, the environmental enclosure module 170 may include at least one transparent portion that extends downward from the roof portion 174 toward the power operated module 12. In the case of a plurality of transparent portions, this would preferably include a front transparent portion 176, a pair of opposing side transparent portions 178, and a rear transparent portion 180. It will be understood that the transparent portion, or plurality thereof, may extend only partially down toward the power operated module 12 such that a gap for air flow remains therebetween. Alternatively, the transparent portion or plurality thereof may extend downward so as to sealingly engage the power operated module 12. The operation and configuration of the environmental enclosure module 12 is described in more detail in co-pending U.S. Provisional Application Serial No. 60/324,145, entitled "Canopy And Visor Windshield For Mobility Vehicle," and filed on September 21, 2001.

The environmental enclosure module 170 is preferably pivotable between a closed position and an open position, in order to allow an occupant access to the carrying compartment 30. The environmental enclosure module 170 may be moveable as a unit between the open position and the closed position or may have one or more portions that are moveable. Further, the environmental enclosure module 170 is preferably accessible for entry or exit via the front transparent portion 176. However, the environmental enclosure module 170 may be accessible for entry or exit from the front transparent portion 176, the pair of opposing side transparent portion 178, the rear transparent portion 180 or any combination thereof. The occupant may also enter into the carrying compartment 30 via the floor enclosure module 32 either individually or in combination with one or more of the plurality of transparent portions. - -

Referring now to Figures 5 through 10 which illustrate various embodiments of preferred stability modules that are located rearwardly of the drive mechanism 14. The stability module illustrated in Figures 5 and 6 illustrates a trailer module 190. The trailer module 190 includes a pair of wheels 192 that are located on either end of a trailer axle 194. The trailer module 190 has a trailer bed 196 for carrying or transporting items. The trailer bed 196 is preferably defined by a front side 198, a pair of opposing sides 200, and a rear side 202. Obviously, one or more of the sides may be open or may be removable. Additionally, the trailer module 190 may have a flat trailer bed. The trailer module 190 preferably includes an attachment arm 204 that is intended to attach to a hitch 208, which is rigidly secured to the frame of the power operated module 12 in such a manner so as to provide fore and aft stability to the power operated module 12.

It is foreseen that the trailer module 190 can be attached by a simple pin to the hitch 208 such as a standard pivot tongue hitch. As will be readily understood, this connection also allows for pivotal movement of the trailer. The trailer module 190 does not provide any stability effect when a front or rear stability module is presently in communication with the power operated module 12. It will be understood that the hitch 208 may also serve as a stability module to prevent the vehicle assembly 10 from tipping over backwards when the trailer module 190 is used in conjunction with a front stability module.

The trailer module 190 may be power articulated by differential speed of a powered axle 194 in communication with the power source 16 and may be driven thereby. Alternatively, the trailer module 190 may be power articulated by an actuation device at the hitch point of 208 and the attachment arm 204 in communication with steering controls and/or the power source 16 and may be driven thereby.

Figures 7 and 8 illustrate another embodiment of a preferred rear stability module. The rear stability module is a track trailer module 210. The track trailer module 210 includes a pair of track devices 212 that are located on either end of an axle 214. The track devices 212 each have a ground engaging portion of a certain length and a chassis with a forward structure portion 213. The track trailer module 210 has a trailer bed 216 for carrying or transporting items. The trailer bed 216 is preferably defined by a front side 218, a pair of opposing sides 220, and a rear side 222. Obviously, one or more of the sides may be open or may be removable. Additionally, the track trailer module 210 may have a flat trailer bed. The track trailer module 210 preferably includes an attachment arm 224 that is intended to attach to the hitch 208, which is rigidly secured to the frame of the power operated module 12 in such a manner so as to provide fore and aft stability to the power operated module 12. It will be understood that the hitch joint of 208 and trailer tongue 204 may be a pivoting, yet rigid joint in manner of fore and aft stability of the power-operated module 12 and fore and aft stability of trailer module 190.

It is foreseen that the trailer module 210 can be attached by a simple pin to the hitch 208, such as a standard pivot tongue hitch. As will be readily understood, this connection also allows for a pivotal connection of the trailer module 210. The trailer module 210 does not provide any stability effect when a front or rear stability module is presently in communication with the power operated module 12. It will be understood that the hitch 208 may also serve as a stability module to prevent the vehicle assembly from tipping over backwards when the trailer module 210 is used in conjunction with a front stability module.

Figures 9 and 10 illustrate another embodiment of a preferred rear stability module with a utility application. The rear stability module 230, shown in Figures 9 and 10, can be configured for an unlimited number of application, such as a turf sprayer, fertilizer or the like. The rear stability module 230 includes a pair of dolly wheels 232 that extend rearwardly from the power operated module 12. As discussed, the rear stability module 230 has rear portion 234 that can carry a wide range of equipment for performing a wide range of utility functions. The rear stability module 230 has attachment arms 236 that allow for attachment to the power operated module 12 in such a manner so as to provide fore and aft stability to the power operated module 12. While a pair of dolly wheels 232 are shown, it will be appreciated that more or less may be utilized.

The power operated module 12 preferably includes a roller bar 209. The roller bar 209 does not provide any stability effect when a front stability module is presently in communication with the power operated module 12 and in normal operation. It will be understood that the roller bar 209 may also serve as a stability module to prevent the vehicle assembly from tipping over backwards in the case of weight shift by means of acceleration or ground grade of operation, which causes unbalance to the rear. In this event, the roller bar 209 contacts the ground and prevents rollover of the power operated module 12. It will be further understood that the roller bar 209 may be mechanically positioned during operation to serve as a stability device during attachment of a stability module as well as to provide vehicle security in the event of vehicle shift.

It will be understood that the modular vehicle assembly 10 can be configured with multiple rear stability modules or trailers attached thereto. Moreover, the modules 190, 210, 230 can also be located forwardly of the drive mechanism 14 to provide both stability and utility functions. It will also be understood that a variety of other rear stability and/or utility modules can be attached to the power operated module 12.

Figures 7 and 8 illustrates a closure module 240 for attachment to the front portion 242 of the power operated module 12. The closure module 240 does not provide any stability function and merely serves to provide more structure to close off the sides of the carrying compartment 30. The closure module 240 has an attachment portion 244 that is shaped to match a corresponding mating surface on the front portion 242 on the power operated module 12.

Figures 9 and 10 illustrate a mower attachment module 250 for attachment to the power operated module 12. The mower attachment module 250 does not provide any stability function and merely serves to provide a utility function. The mower attachment module 250 attaches to the power operated module 12 and is carried thereby. The mower attachment module 250 includes a mower 252 that is preferably in communication with the power source 16 to effectuate operation thereof. The mower attachment module 250 may be located forwardly or rearwardly of the drive mechanism 14.

The power operated module 12 preferably incorporates other temporary stability modules, such as a skid plate. It is understood that a corresponding weight package could be temporarily employed in conjunction with the use of the temporary stability module that temporarily provides balance for the power operated module 12 when it is unhitched from one or more stability modules. Alternatively, instead of a skid plate, the temporary stability module may include a rolling device. It will also be understood that the temporary stability device can be mechanically moved into position for the stability purpose.

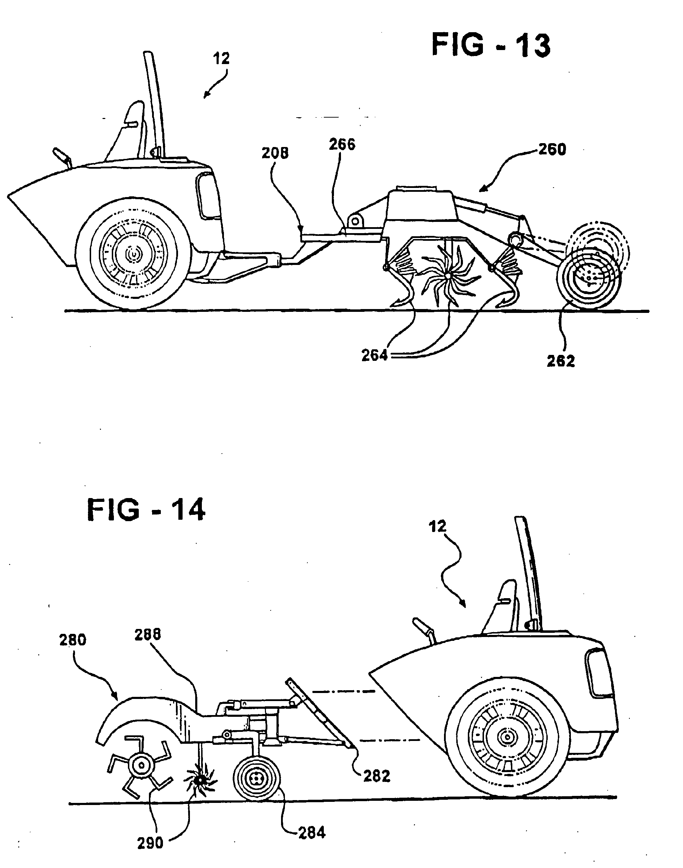

Referring now to Figure 13, which illustrates another embodiment of a preferred rear stability module with a utility application. The rear stability module is a rear tillage module 260. The rear tillage module 260 includes a pair of wheels 262 that are movable between a ground engaging position and a position above the ground. The rear tillage module 260 includes tillage equipment, generally indicated by reference number 264, for performing a utility function. The rear tillage module 260 preferably includes an attachment arm 266 that is intended to attach to the hitch 208, which is rigidly secured to the frame of the power operated module 12 in such a manner so as to provide fore and aft stability to the power operated module 12.

Referring now to Figure 14, which illustrates another embodiment of a forward stability module in accordance with the present invention. The forward stability module shown in Figure 14 is a tillage stability module 280. The tillage stability module 280 includes an attachment bar 282 and a pair of dolly wheels 284. Each of the pair of dolly wheels 284 is attached to a frame and suspension portion 286 that is in communication with a respective attachment surface 288. Alternatively, instead of a pair of dolly wheels, one or more wheels that is steered in communication with the drive module may be utilized. A further alternative would have the tillage stability module 280 articulated steered in communication with the steering of the power off-road module 12. The tillage stability module 280 also includes tillage equipment which is generally indicated by reference number 290, extending therefrom to allow for a tillage function. The tillage stability module 280 can also be easily attached to and removed from the power operated module 12 by way of the attachment bar 282 and the attachment surfaces 288 or coupling system effectuating attachment thereof. The tillage equipment 290 is preferably in communication with the power source 16 to effectuate operation thereof. The tillage module 280 thus provides both a stability function by providing balance to the vehicle assembly 10 and a utility function by providing sweeping capabilities.

While a preferred embodiment of the present invention has been described so as to enable one skilled in the art to practice the present invention, it is to be understood that variations and modifications may be employed without departing from the purview and intent of the present invention, as defined in the following claims. Accordingly, the preceding description is intended to be exemplary and should not be used to limit the scope of the invention. The scope of the invention should be determined only by reference to the following claims.

## Claims

1. A modular vehicle assembly (10), comprising:
a power operated module (12) having a drive mechanism (14) and a carrying compartment located substantially above said drive mechanism, said module having also a hitch (208) rigidly secured to a frame of the module at the rear of said module;
a power source (16) of said power operated module in communication with said drive mechanism;
a pair of ground engaging devices (20) located on opposite sides of said power operated module, with each of said ground engaging devices being in communication with said drive mechanism; and
a plurality of interchangeable stability modules (18) configured to communicate with the ground when coupled to said power operated module to, at least in part, provide fore and aft balance to said power operated module;
wherein said plurality of stability modules comprises:
i) a dolly wheel module (100) including an attachment bar (102) and one or more attachment surface (108) configured for attachment to a forward portion of said power operated module; and
ii) a trailer module including an attachment arm configured to attach to said hitch (208).

2. The assembly of claim 1, wherein said plurality of stability modules further includes one or more of:
i) a mower stability module (110) including a pair of dolly wheels, and a coupling system, configured for attachment to a forward portion of said power operated module, and a mower (120);
ii) a snow blower module (130) including one or more wheels (134) steered in communication with the power source, an attachment bar (132) and attachment surfaces (138), or a coupling system, configured for attachment to a forward portion of said power operated module, and a snowblower (140);
iii) a sweeper module (150) including one or more wheels (154) steered in communication with the power source, an attachment bar (152) and attachment surfaces (158), or a coupling system, configured for attachment to a forward portion of said power operated module, and a sweeper (160); and
iv) a tillage module (280) including one or more wheels (284) steered in communication with the power source, an attachment bar (282) and attachment surfaces (288), or a coupling system, configured for attachment to a forward portion of said power operated module, and tillage equipment (290).

3. The assembly of claim 1 or claim 2, wherein said plurality of stability modules further includes one or more of:
i) a rear tillage module (260) including an attachment arm configured to attach to said hitch, a pair of wheels moveable between a ground engaging position and a position above the ground, and tillage equipment;
ii) a turf sprayer module having one or more dolly wheels and attachment arms configured for attachment to a rear portion of said power operated module, thereby to provide said stability; and
iii) a fertilizer module having one or more dolly wheels and attachment arms configured for attachment to a rear portion of said power operated module, thereby to provide said stability.

4. The assembly of any preceding claim, wherein said power operated module (12) includes a roller bar (209) projecting rearwardly therefrom, said roller bar configured to prevent backwards rollover of the modular vehicle assembly.

5. The assembly of claim 1, wherein said power source is incorporated into said power operated module.

6. The assembly of claim 5, wherein said power source is an internal combustion engine.

7. The assembly of claim 5, wherein said power source is an electric motor.

8. The assembly of claim 7, wherein said power source further includes at least one battery.

9. The assembly of claim 5, wherein said power source is a hybrid-electric unit having an internal combustion engine, which drives a generator and supplies power to an electric drive motor.

10. The assembly of claim 9, wherein said power source further includes at least one storage battery unit that is powered by said generator.

11. The assembly of claim 5, wherein said power source is a fuel cell.

12. The assembly of claim 5, wherein said drive mechanism includes a primary axle.

13. The assembly of claim 5, wherein said drive mechanism includes an independent suspension system.

14. The assembly of claim 1, wherein said carrying compartment is intended to receive at least one occupant therein when the vehicle assembly is occupant driven.

15. The assembly of claim 14, further comprising:
a seating module located in said carrying compartment for accommodating said at least one occupant.

16. The assembly of claim 1, further comprising:
a drive component module in communication with said drive mechanism, said drive component module including said pair of ground engaging devices.

## Patentansprüche

1. Modulare Fahrzeugbaugruppe (10) umfassend:
ein kraftbetätigtes Modul (12), welches einen Antriebsmechanismus (14) und ein Beförderungsabteil aufweist, welches im Wesentlichen über dem Antriebsmechanismus angeordnet ist, wobei das Modul ferner eine Anhängerkupplung (208) aufweist, welche starr an einem Rahmen des Moduls am Heck des Moduls befestigt ist;
eine Energiequelle (16) des kraftbetätigten Moduls, welche mit dem Antriebsmechanismus in Verbindung steht;
ein Paar von mit dem Boden in Eingriff tretenden Vorrichtungen (20), welche auf entgegengesetzten bzw. gegenüberliegenden Seiten des Kraft betätigten Moduls angeordnet sind, wobei jede mit dem Boden in Eingriff tretende Vorrichtung mit dem Antriebsmechanismus in Verbindung steht; und
eine Vielzahl von austauschbaren Stabilitätsmodulen (18), welche konfiguriert sind, um mit dem Boden in Verbindung zu stehen, wenn diese an das Kraft betätigte Modul gekoppelt sind, um zumindest teilweise eine Längsbalance zu gewährleisten;
wobei die Vielzahl von Stabilitätsmodulen umfasst:
i) ein Rollwagenmodul (100), welches eine Befestigungsstange (102) und eine oder mehrere Befestigungsflächen bzw. -oberflächen (108) umfasst, welche konfiguriert sind, um an einem vorderen Bereich des kraftbetätigten Moduls befestigt zu sein; und
ii) ein Anhängermodul, welches einen Befestigungsarm umfasst, welcher konfiguriert ist, um an der Anhängerkupplung (208) befestigt zu sein.

2. Baugruppe nach Anspruch 1, wobei die Vielzahl von Stabilitätsmodulen ferner eine oder mehrere der Folgenden (Module) umfasst:
i) ein Mäher-Stabilitätsmodul (110), welches ein Paar Rollrädern und ein Kupplungssystem, welches konfiguriert ist, um an einem vorwärts gerichteten Bereich des Kraft betätigten Moduls befestigt zu sein, und einen Mäher (120) umfasst;
ii) ein Schneefräsen- bzw. Schneeschleuder-Modul (130), welches ein oder mehrere Räder (134), welche in Verbindung mit der Energiequelle gesteuert werden, eine Befestigungsstange (132) und Befestigungsflächen bzw. -oberflächen (138) oder ein Kupplungssystem, welches konfiguriert ist, um an einem vorwärts gerichteten Bereich des Kraft betätigten Moduls befestigt zu sein, und eine Schneefräse (140) umfasst;
iii) ein Kehrmaschinen-Modul (150), welches eine oder mehrere Räder (154), welche in Verbindung mit der Energiequelle gesteuert werden, eine Befestigungsstange (152) und Befestigungsflächen bzw. -oberflächen (158) oder ein Kupplungssystem, welches konfiguriert ist, um an einem vorwärts gerichteten Bereich des Kraft betätigten Moduls befestigt zu sein, und eine Kehrmaschine (160) umfasst; und
iv) ein Bodenbearbeitungs-Modul (280), welches ein oder mehrere Räder (284), welche in Verbindung mit der Energiequelle gesteuert werden, eine Befestigungsstange (282) und Befestigungsflächen bzw. -oberflächen (288) oder ein Kupplungssystem, welches konfiguriert ist, um an einem vorwärts gerichteten Bereich des Kraft betätigten Moduls befestigt zu sein, und eine Bodenbearbeitungseinrichtung (290) umfasst.

3. Baugruppe nach Anspruch 1 oder 2, wobei die Vielzahl von Stabilitätsmodulen ferner ein oder mehrere der Folgenden (Module) umfasst:
i) ein hinteres Bodenbearbeitungs-Modul (260), welches einen Befestigungsarm, welcher konfiguriert ist, um an der Anhängerkupplung befestigt zu sein, ein Paar Räder, welche zwischen einer mit dem Boden in Eingriff tretenden Position und eine Position über dem Boden beweglich sind, und eine Bodenbearbeitungseinrichtung umfasst;
ii) ein Rasenbesprüher-Modul, welches ein oder mehrere Rollräder und Befestigungsarme umfasst, welche konfiguriert sind, um an einem hinteren Bereich des kraftbetätigten Moduls befestigt zu sein, um dabei die Stabilität zu gewährleisten; und
iii) ein Dünger-Modul, welches ein oder mehrere Rollräder und Befestigungsarme umfasst, welche konfiguriert sind, um an einem nach hinten gerichteten Bereich des kraftbetätigten Moduls befestigt zu sein, um dabei die Stabilität zu gewährleisten.

4. Baugruppe nach einem der vorhergehenden Ansprüche, wobei das kraftbetätigte Modul (12) eine Rollenstange (209) umfasst, welche rückwärts davon hervorragt, wobei die Rollenstange konfiguriert ist, um einen rückwärts gerichteten Überschlag der modularen Fahrzeugzusammensetzung zu verhindern.

5. Baugruppe nach Anspruch 1, wobei die Energiequelle in das kraftbetätigte Modul eingebunden ist.

6. Baugruppe nach Anspruch 5, wobei die Energiequelle eine Brennkraftmaschine ist.

7. Baugruppe nach Anspruch 5, wobei die Energiequelle ein Elektromotor ist.

8. Baugruppe nach Anspruch 7, wobei die Energiequelle ferner zumindest eine Batterie umfasst.

9. Baugruppe nach Anspruch 5, wobei die Energiequelle eine Hybrideinheit ist, welche eine Brennkraftmaschine aufweist, welche einen Generator antreibt und einem Elektromotor Energie zuführt.

10. Baugruppe nach Anspruch 9, wobei die Energiequelle ferner zumindest eine Akkumulatorenbatterieeinheit umfasst, welche von dem Generator angetrieben wird.

11. Baugruppe nach Anspruch 5, wobei die Energiequelle eine Brennstoffzelle ist.

12. Baugruppe nach Anspruch 5, wobei der Antriebsmechanismus eine Primärachse umfasst.

13. Baugruppe nach Anspruch 5, wobei der Antriebsmechanismus ein unabhängiges Aufhängungssystem umfasst.

14. Baugruppe nach Anspruch 1, wobei das Beförderungsabteil dazu vorgesehen ist, zumindest einen Insassen darin aufzunehmen, wenn die Fahrzeugbaugruppe von dem Insassen gelenkt wird.

15. Baugruppe nach Anspruch 14, ferner umfassend:
ein Sitz-Modul, welches in dem Beförderungsabteil angeordnet ist, um den zumindest einen Insassen aufzunehmen.

16. Baugruppe nach Anspruch 1, ferner umfassend:
ein Antriebskomponenten-Modul, welches mit dem Antriebsmechanismus in Verbindung steht, wobei das Antriebskomponenten-Modul ein Paar von mit dem Boden in Eingriff tretenden Vorrichtungen umfasst.

## Revendications

1. Véhicule modulaire (10) comprenant :
un module motorisé (12) comportant un mécanisme d'entraînement (14) et
un compartiment de transport situé essentiellement au-dessus dudit mécanisme d'entraînement, ledit module comportant aussi une barre d'attelage (208) fixée de façon rigide à un châssis du module, à l'arrière dudit module ;
une source d'alimentation (16) dudit module motorisé en communication avec ledit mécanisme d' entraînement ;
une paire de dispositifs destinés à s'engager avec le sol (20) situés sur les côtés opposés dudit module motorisé, chacun desdits dispositifs destinés à s'engager avec le sol se trouvant en communication avec ledit mécanisme d'entraînement ; et
plusieurs modules de stabilité interchangeables (18) configurés pour communiquer avec le sol lorsqu'ils sont couplés audit module motorisé pour fournir au moins en partie un équilibrage longitudinal par rapport audit module motorisé ;
dans lequel ladite pluralité de modules de stabilité comprend :
i) une béquille de remorque (100) comportant une barre d'attache (102) et une ou plusieurs surfaces d'attache (108) configurées pour s'attacher à une portion avant dudit module motorisé ; et
ii) un module de remorque comportant un bras d'attache configuré pour s'attacher à ladite barre d'attelage (208).

2. Véhicule de la revendication 1, dans lequel ladite pluralité de modules de stabilité comprend en outre un ou plusieurs des modules suivants :
i) un module de stabilité de fauchage (110) comportant une paire de béquilles de remorque, un système de couplage configuré pour s'attacher à une portion avant dudit module motorisé, et une faucheuse (120) ;
ii) un module de turbine à neige (130) comportant une ou plusieurs roues (134), dirigées en communication avec la source d'alimentation, une barre d'attache (132) et des surfaces d'attache (138), ou un système de couplage, configuré pour s'attacher à une portion avant dudit module motorisé, et une turbine à neige (140) ;
iii) un module de balayage (150) comportant une ou plusieurs roues (154), dirigées en communication avec la source d'alimentation, une barre d'attache (152) et des surfaces d'attache (158), ou un système de couplage, configuré pour s'attacher à une portion avant dudit module motorisé, et une balayeuse (160) ; et
iv) un module de labourage (280) comportant une ou plusieurs roues (284), dirigées en communication avec la source d'alimentation, une barre d'attache (282) et des surfaces d'attache (288), ou un système de couplage, configuré pour s'attacher à une portion avant dudit module motorisé, et un équipement de labour (290).

3. Véhicule selon la revendication 1 ou la revendication 2, dans lequel ladite pluralité de modules de stabilité comprend de plus un ou plusieurs des modules suivants :
i) un module de labourage arrière (260) comportant un bras d'attache configuré pour s'attacher à ladite barre d'attelage, une paire de roues mobiles entre une position d'engagement au sol et une position au-dessus du sol, et un équipement de labour ;
ii) un module de pulvérisateur de gazon comportant une ou plusieurs béquilles de remorques et des bras d'attache, configuré pour s'attacher à une portion arrière dudit module motorisé, pour fournir alors ladite stabilité ; et
iii) un module distributeur d'engrais comportant une ou plusieurs béquilles de remorque et des bras d'attache, configuré pour s'attacher à une portion arrière dudit module motorisé, pour fournir alors ladite stabilité.

4. Véhicule selon l'une des revendications précédentes, dans lequel ledit module motorisé (12) comprend une barre de pression (209) faisant saillie depuis celui-ci à l'arrière, ladite barre de pression étant configurée pour éviter le capotage en arrière du véhicule modulaire.

5. Véhicule selon la revendication 1, dans lequel ladite source d'alimentation est incorporée dans ledit module motorisé.

6. Véhicule selon la revendication 5, dans lequel ladite source d'alimentation est un moteur à combustion interne.

7. Véhicule selon la revendication 5, dans lequel ladite source d'alimentation est un moteur électrique.

8. Véhicule selon la revendication 7, dans lequel ladite source d'alimentation comprend en outre au moins une batterie.

9. Véhicule selon la revendication 5, dans lequel ladite source d'alimentation est une unité électrique hybride comportant un moteur à combustion interne qui entraîne un générateur et fournit l'alimentation à un moteur électrique.

10. Véhicule selon la revendication 9, dans lequel ladite source d'alimentation comprend en outre au moins une unité de batterie de stockage qui est alimentée par ledit générateur.

11. Véhicule selon la revendication 5, dans lequel ladite source d'alimentation est une pile à combustible.

12. Véhicule selon la revendication 5, dans lequel ledit mécanisme d'entraînement comprend un essieu principal.

13. Véhicule selon la revendication 5, dans lequel ledit mécanisme d'entraînement comprend un système de suspension indépendant.

14. Véhicule selon la revendication 1, dans lequel ledit compartiment de transport est destiné à recevoir au moins un occupant à l'intérieur lorsque le véhicule est conduit par un occupant.

15. Véhicule selon la revendication 14, comportant en outre :
un module de siège situé dans ledit compartiment de transport et destiné à loger ledit occupant, au moins au nombre de un.

16. Véhicule selon la revendication 1, comprenant en outre :
un module de composant d'entraînement en communication avec ledit mécanisme d'entraînement, ledit module de composant d'entraînement comportant ladite paire de dispositifs destinés à s'engager avec le sol.
